# EUROPÄISCHE PATENTANMELDUNG

(11) **EP 4 391 267 A1**
(43) Veröffentlichungstag der Anmeldung: **26.06.2024**
(21) Anmeldenummer: 22214868.6
(22) Anmeldetag: 20.12.2022
(51) Int. Cl.: H02J 1/10, H02J 1/14

(54) **VERFAHREN ZUM BEEINFLUSSEN EINES ELEKTRISCHEN LEISTUNGSFLUSSES**

(71) Anmelder: Siemens Energy Global GmbH & Co. KG, 81739 München (DE)
(72) Erfinder: Westerweller, Thomas, 96135 Stegaurach (DE)

(57) **Zusammenfassung**

Die Erfindung betrifft ein Verfahren zum Beeinflussen eines elektrischen Leistungsflusses in einem Hochspannungs-Gleichstrom-Übertragungsnetz (1), wobei das Hochspannungs-Gleichstrom-Übertragungsnetz eine Anzahl von Zweigen (21, 22, 23, 24, 25) und eine Anzahl von Knoten (11, 12, 13, 14) aufweist, wobei ein Teil der Zweige (21, 22) jeweils einen Lastflussregler (301, 302) aufweist. Zur Verringerung der elektrischen Leistung, die über einen einen Lastflussregler (301) aufweisenden Zweig (21) übertragen wird, wird von dem Lastflussregler (301) der ohmsche Widerstand des Zweigs (21) um einen im Wesentlichen konstanten Wert vergrößert. Zur Vergrößerung der elektrischen Leistung, die über den den Lastflussregler (301) aufweisenden Zweig (21) übertragen wird, wird von dem Lastflussregler (301) der ohmsche Widerstand des Zweigs um einen im Wesentlichen konstanten Wert verringert.

## Beschreibung

Die Erfindung betrifft ein Verfahren zum Beeinflussen eines elektrischen Leistungsflusses in einem Hochspannungs-Gleichstrom-Übertragungsnetz sowie ein Hochspannungs-Gleichstrom-Übertragungsnetz.

Hochspannungs-Gleichstrom-Übertragungsnetze werden benötigt, um elektrische Energie über große Entfernungen zu übertragen.

Eine Steuerung des Leistungsflusses durch die Zweige des Hochspannungs-Gleichstrom-Übertragungsnetzes ist wünschenswert, weil dann die insgesamt zu übertragende Leistung sinnvoll auf die einzelnen Zweige des Hochspannungs-Gleichstrom-Übertragungsnetzes aufgeteilt werden kann.

Es ist vorstellbar, dass ein Teil der Zweige mit Lastflussreglern versehen ist. Da jedoch jeder Lastflussregler ein eigenständiges statisches und dynamisches Verhalten aufweist, wird durch die Lastflussregler das statische und dynamische Gesamtverhalten des gesamten Hochspannungs-Gleichstrom-Übertragungsnetzes wesentlich beeinflusst und komplexer.

Der Erfindung liegt die Aufgabe zugrunde, ein Verfahren und ein Hochspannungs-Gleichstrom-Übertragungsnetz anzugeben, bei denen der Lastfluss gezielt beeinflusst werden kann und das Verhalten des Hochspannungs-Gleichstrom-Übertragungsnetzes dennoch vergleichsweise einfach nachvollziehbar bleibt.

Diese Aufgabe wird erfindungsgemäß gelöst durch ein Verfahren und ein Hochspannungs-Gleichstrom-Übertragungsnetz nach den unabhängigen Patentansprüchen. Vorteilhafte Ausgestaltungen des Verfahrens und des Hochspannungs-Gleichstrom-Übertragungsnetzes sind in den abhängigen Patentansprüchen angegeben.

Offenbart wird ein Verfahren zum Beeinflussen eines elektrischen Leistungsflusses in einem (insbesondere vermaschten) Hochspannungs-Gleichstrom-Übertragungsnetz, wobei das Hochspannungs-Gleichstrom-Übertragungsnetz eine Anzahl von Zweigen und eine Anzahl von Knoten aufweist, ein Teil der Knoten Anschlussknoten sind, an die jeweils ein Stromrichter anschließbar ist, der zum Einspeisen von elektrischer Leistung in das Hochspannungs-Gleichstrom-Übertragungsnetz oder zum Entnehmen von elektrischer Leistung aus dem Hochspannungs-Gleichstrom-Übertragungsnetz eingerichtet ist, und wobei ein Teil der Zweige jeweils einen Lastflussregler aufweist,
wobei bei dem Verfahren
- zur Verringerung der elektrischen Leistung, die über einen einen Lastflussregler aufweisenden Zweig übertragen wird, der Lastflussregler derart angesteuert wird, dass der Lastflussregler den ohmschen Widerstand des Zweigs um einen im Wesentlichen konstanten Wert vergrößert, und
- zur Vergrößerung der elektrischen Leistung, die über den den Lastflussregler aufweisenden Zweig übertragen wird, der Lastflussregler derart angesteuert wird, dass der Lastflussregler den ohmschen Widerstand des Zweigs um einen im Wesentlichen konstanten Wert verringert (verkleinert).

Hierbei ist vorteilhaft, dass
- zur Verringerung der elektrischen Leistung, die über einen einen Lastflussregler aufweisenden Zweig übertragen wird, von dem Lastflussregler der ohmsche Widerstand des Zweigs um einen im Wesentlichen konstanten Wert vergrößert wird, und
- zur Vergrößerung der elektrischen Leistung, die über den den Lastflussregler aufweisenden Zweig übertragen wird, von dem Lastflussregler der ohmsche Widerstand des Zweigs um einen im Wesentlichen konstanten Wert verringert wird. Mit anderen Worten gesagt, beeinflusst der Lastflussregler den jeweiligen Zweig so, dass es wirkt, als ob ein zusätzlicher konstanter positiver oder negativer Widerstand in den jeweiligen Zweig einfügt werden würde. Besonders vorteilhaft ist, dass der ohmsche Widerstand jeweils um einen im Wesentlichen konstanten Wert verändert wird. Dadurch lässt sich das Verhalten des Hochspannungs-Gleichstrom-Übertragungsnetzes vergleichsweise einfach beschreiben. Wenn beispielsweise das Verhalten durch eine Widerstandsmatrix oder Admittanzmatrix beschrieben wird, welche die Widerstände oder Admittanzen der einzelnen Zweige des Hochspannungs-Gleichstrom-Übertragungsnetzes aufweist, dann kann der Einfluss eines Lastflussreglers einfach als ein zusätzlicher konstanter Widerstand in dem jeweiligen Zweig bzw. als eine zusätzliche konstante Admittanz in dem jeweiligen Zweig in der Matrix berücksichtigt werden. Dadurch kann das Hochspannungs-Gleichstrom-Übertragungsnetz trotz des Vorhandenseins von Lastflussreglern vergleichsweise einfach beschrieben bzw. modelliert werden. Der elektrische Leistungsfluss wird auch als Lastfluss bezeichnet; hier werden die Begriffe Lastfluss und Leistungsfluss synonym verwendet. Ein Lastflussregler kann auch als ein Lastflussaufteilungsregler bezeichnet werden.

Das Verfahren kann so ausgestaltet sein, dass
- die Lastflussregler jeweils als eine Längsspannungsquelle ausgestaltet sind.
Dadurch kann mittels der Lastflussregler die an dem jeweiligen Zweig auftretende Spannung verändert und dadurch der Lastfluss durch den Zweig beeinflusst werden.

Das Verfahren kann so ablaufen, dass
- zur Verringerung oder Vergrößerung der elektrischen Leistung, die über den den Lastflussregler aufweisenden Zweig übertragen wird, von dem Lastflussregler elektrische Energie in den Zweig eingespeist wird oder elektrische Energie aus dem Zweig entnommen wird. Die Lastflussregler sind also jeweils zum Einspeisen von elektrischer Energie in das Hochspannungs-Gleichstrom-Übertragungsnetz oder zum Entnehmen von elektrischer Energie aus dem Hochspannungs-Gleichstrom-Übertragungsnetz eingerichtet. Dadurch kann insbesondere auch die Wirkung erzielt werden, als ob ein zusätzlicher negativer ohmscher Widerstand (also ein ohmscher Widerstand mit konstanter negativer Größe) in den Zweig eingefügt wird.

Das Verfahren kann auch so ablaufen, dass
- von dem Lastflussregler elektrische Energie in den Zweig eingespeist wird, wenn von dem Lastflussregler eine längs des Zweigs wirkende elektrische Spannung erzeugt wird, deren Polarität mit der Richtung des durch den Zweig fließenden Gleichstroms übereinstimmt, und
- von dem Lastflussregler elektrische Energie aus dem Zweig entnommen wird, wenn von dem Lastflussregler eine längs des Zweigs wirkende elektrische Spannung erzeugt wird, deren Polarität entgegengesetzt ist zur Richtung des durch den Zweig fließenden Gleichstroms.
Dabei wird die gleiche Zählpfeilrichtung für Strom und Spannung vorausgesetzt; dies entspricht dem sogenannten Verbraucherzählpfeilsystem. Die Energie kann beispielsweise von einer mit dem Lastflussregler verbundenen Energiequelle stammen oder die Energie kann zu einer mit dem Lastflussregler verbundenen Energiesenke übertragen werden. Eine solche Energiequelle bzw. Energiesenke kann zum Beispiel ein Stromrichter sein. Eine solche Energiequelle bzw. Energiesenke kann aber zum Beispiel auch ein anderer Lastflussregler sein. Im letzteren Fall sind also beispielsweise zwei Lastflussregler über eine Energieübertragungsstrecke miteinander verbunden, wobei der eine der beiden Lastflussregler überschüssige Energie zu dem anderen der beiden Lastflussregler überträgt und der andere der beiden Lastflussregler die überschüssige Energie aufnimmt. In diesem Fall arbeiten die beiden miteinander verbundenen Lastflussregler energiekomplementär, was bedeutet, dass der eine Lastflussregler Energie abgibt und der andere Lastflussregler die Energie aufnimmt. In diesem Fall muss man zwar diese Abhängigkeit in Kauf nehmen, dafür ist das Verfahren aber sehr energieeffizient bzw. energiesparend realisierbar. Die beiden Lastflussregler können auch als ein Gerät realisiert sein.

Das Verfahren kann so ablaufen, dass
- von dem Lastflussregler eine längs des jeweiligen Zweigs wirkende (zusätzliche) elektrische Spannung erzeugt wird, die sich proportional zu dem den Zweig durchfließenden Gleichstrom verhält. Dadurch ist der durch den Lastflussregler erzeugte zusätzliche ohmsche Widerstand des Zweigs konstant. Der zusätzliche ohmsche Widerstand kann positive oder negative Werte annehmen. Die Lastflussregler können also derart ausgebildet sein, dass sich die zusätzliche Zweigspannung des jeweiligen Zweigs proportional zu dem den Zweig durchfließenden Gleichstrom (Zweigstrom) verändert, wenn sich dieser Gleichstrom verändert. Von außerhalb des Zweiges betrachtet sieht es dann vorteilhafterweise so aus, als ob der Zweig einen zusätzlichen konstanten Widerstand bzw. eine zusätzliche konstante Admittanz aufweist. Mit anderen Worten gesagt, wirkt der Lastflussregler wie ein zusätzlicher ohmscher Widerstand in dem Zweig.

Das Verfahren kann auch so ablaufen, dass
die Anzahl der Anschlussknoten kleiner ist als die Anzahl der Zweige.

Dann ist insbesondere die Anzahl der Stromrichter, die elektrische Leistung in das Hochspannungs-Gleichstrom-Übertragungsnetz einspeisen oder elektrische Leistung aus dem Hochspannungs-Gleichstrom-Übertragungsnetz entnehmen, kleiner ist als die Anzahl der Zweige des Hochspannungs-Gleichstrom-Übertragungsnetzes. Dann kann durch Steuerung der von den Stromrichtern eingespeisten oder entnommenen Leistung die Aufteilung der Leistungsfluss durch jeden dieser Zweige nicht vollständig gesteuert werden. In diesem Fall ist es besonders sinnvoll, Lastflussreglern in dem Hochspannungs-Gleichstrom-Übertragungsnetz einzusetzen, um mit diesen den Leistungsfluss in mehr Zweigen oder in allen Zweigen steuern zu können. Dann kann vorteilhaferweise die insgesamt zu übertragende Leistung besser auf die einzelnen Zweige des Hochspannungs-Gleichstrom-Übertragungsnetz aufgeteilt werden.

Das Verfahren kann so ablaufen, dass
- wenn der Strom in dem jeweiligen Zweig einen unzulässig hohen Wert annimmt, von dem Lastflussregler eine längs dieses Zweigs wirkende elektrische Spannung erzeugt wird, welche einer weiteren Erhöhung des Stroms in diesem Zweig entgegenwirkt.
Dadurch kann eine (ggf. zusätzliche) Überstrombegrenzung für das Hochspannungs-Gleichstrom-Übertragungsnetz realisiert werden.

Offenbart wird weiterhin ein Hochspannungs-Gleichstrom-Übertragungsnetz, das eine Anzahl von Zweigen und eine Anzahl von Knoten aufweist, wobei ein Teil der Knoten Anschlussknoten sind, an die jeweils ein Stromrichter anschließbar ist, der zum Einspeisen von elektrischer Leistung in das Hochspannungs-Gleichstrom-Übertragungsnetz oder zum Entnehmen von elektrischer Leistung aus dem Hochspannungs-Gleichstrom-Übertragungsnetz eingerichtet ist, wobei ein Teil der Zweige jeweils einen Lastflussregler aufweist, und wobei mindestens einer der Lastflussregler so eingerichtet ist, dass er
- zur Verringerung der elektrischen Leistung, die über den diesen Lastflussregler aufweisenden Zweig übertragen wird, den ohmschen Widerstand des Zweigs um einen im Wesentlichen konstanten Wert vergrößert, und
- zur Vergrößerung der elektrischen Leistung, die über den diesen Lastflussregler aufweisenden Zweig übertragen wird, den ohmschen Widerstand des Zweigs um einen im Wesentlichen konstanten Wert verringert.

Bei dem Hochspannungs-Gleichstrom-Übertragungsnetz können die Lastflussregler jeweils als eine Längsspannungsquelle ausgestaltet sein.

Bei dem Hochspannungs-Gleichstrom-Übertragungsnetz können einer oder mehrere oder alle Lastflussregler jeweils so eingerichtet sein, dass sie
- zur Verringerung oder Vergrößerung der elektrischen Leistung, die über den den jeweiligen Lastflussregler aufweisenden Zweig übertragen wird, elektrische Energie in den Zweig einspeisen oder elektrische Energie aus dem Zweig entnehmen.

Bei dem Hochspannungs-Gleichstrom-Übertragungsnetz kann der Lastflussregler auch so eingerichtet sein, dass er
- elektrische Energie in den (diesen Lastflussregler aufweisenden) Zweig einspeist, wenn er eine längs des Zweigs wirkende elektrische Spannung erzeugt, deren Polarität mit der Richtung des durch den Zweig fließenden Gleichstroms übereinstimmt, und
- elektrische Energie aus dem (diesen Lastflussregler aufweisenden) Zweig entnimmt, wenn er eine längs des Zweigs wirkende elektrische Spannung erzeugt, deren Polarität entgegengesetzt ist zur Richtung des durch den Zweig fließenden Gleichstroms. Natürlich können auch mehrere oder alle Lastflussregler so eingerichtet sein.

Bei diesem Hochspannungs-Gleichstrom-Übertragungsnetz kann der Lastflussregler so eingerichtet sein, dass er eine längs des diesen Lastflussregler aufweisenden Zweigs wirkende (zusätzliche) elektrische Spannung erzeugt, die sich proportional zu dem den Zweig durchfließenden Gleichstrom verhält. Dadurch ist der zusätzliche ohmsche Widerstand des Zweigs, der durch den Lastflussregler erzeugt wird, konstant.

Bei dem Hochspannungs-Gleichstrom-Übertragungsnetz kann die Anzahl der Anschlussknoten kleiner sein als die Anzahl der Zweige.Bei dem Hochspannungs-Gleichstrom-Übertragungsnetz kann der Lastflussregler so eingerichtet/ausgebildet sein, dass er, wenn der Strom in dem den Lastflussregler aufweisenden Zweig einen unzulässig hohen Wert annimmt, eine längs dieses Zweigs wirkende elektrische Spannung erzeugt, welche einer weiteren Erhöhung des Stroms in diesem Zweig entgegenwirkt.

Das Verfahren und das Hochspannungs-Gleichstrom-Übertragungsnetz weisen gleiche oder gleichartige Eigenschaften und/oder Vorteile auf.

Im Folgenden wird die Erfindung anhand eines Ausführungsbeispiels näher erläutert. Gleiche Bezugszeichen verweisen dabei auf gleiche oder gleich wirkende Elemente. Dazu ist in
- Figur 1: ein Ausführungsbeispiel eines Hochspannungs-Gleichstrom-Übertragungsnetzes, in
- Figur 2: ein beispielhaftes Gleichungssystem mit einer das Hochspannungs-Gleichstrom-Übertragungsnetz beschreibenden Admittanzmatrix, und in
- Figur 3: das Hochspannungs-Gleichstrom-Übertragungsnetz aus Figur 1 mit zwei beispielhaften Lastflussreglern

### dargestellt.

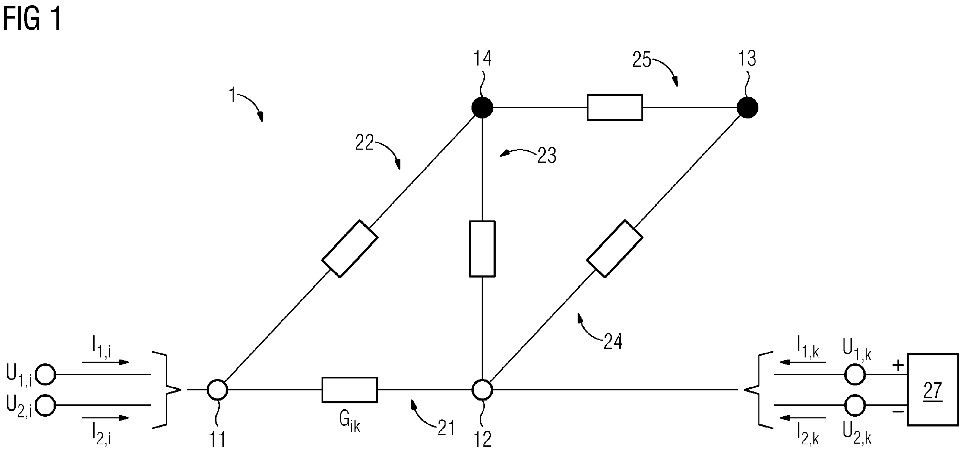

In Figur 1 ist ein Ausführungsbeispiel eines Hochspannungs-Gleichstrom-Übertragungsnetzes 1 dargestellt. Das Hochspannungs-Gleichstrom-Übertragungsnetz 1 weist 4 Knoten und 5 Zweige auf. Dargestellt sind ein erster Knoten 11, ein zweiter Knoten 12, ein dritter Knoten 13, ein vierter Knoten 14, ein erster Zweig 21, ein zweiter Zweig 22, ein dritter Zweig 23, ein vierter Zweig 24 und ein fünfter Zweig 25.

Der erste Knoten 11 stellt allgemein betrachtet einen i-ten Knoten des Hochspannungs-Gleichstrom-Übertragungsnetzes 1 dar; der zweite Knoten 12 stellt einen k-ten Knoten des Hochspannungs-Gleichstrom-Übertragungsnetzes 1 dar.

Ein Teil der Knoten sind Anschlussknoten, an die jeweils ein Stromrichter anschließbar ist. Im Ausführungsbeispiel sind die Anschlussknoten jeweils als ein Kreis mit hellem Mittelpunkt dargestellt; die anderen Knoten sind als ein vollflächig schwarzer Kreis dargestellt. Im Ausführungsbeispiel sind der erste Knoten 11 und der zweite Knoten 12 Anschlussknoten, wohingegen der dritte Knoten 13 und der vierte Knoten 14 übertragungsnetzinterne Knoten (also keine Anschlussknoten) sind. Die Anzahl der Anschlussknoten ist also kleiner als die Anzahl der Zweige. Die Stromrichter, die an die Anschlussknoten angeschlossen werden können, sind jeweils zum Einspeisen von elektrischer Leistung in das Hochspannungs-Gleichstrom-Übertragungsnetz oder zum Entnehmen von elektrischer Leistung aus dem Hochspannungs-Gleichstrom-Übertragungsnetz eingerichtet. Beispielhaft ist ein Stromrichter 27 dargestellt, der an den zweiten Knoten 12 (Anschlussknoten 12) angeschlossen ist. An den ersten Knoten 11 kann in gleichartiger Weise ein Stromrichter angeschlossen sein.

Die Zweige sind als einfache Linien dargestellt. In der Praxis weist jeder Zweig zwei elektrische Leitungen auf: eine erste elektrische Leitung für den Gleichstrom positiver Polarität und eine zweite elektrische Leitung für den Gleichstrom negativer Polarität. Am Anschlussknoten 11 sind die in den Knoten hineinfließenden Ströme I_{1,i} und I_{2,i} und die zugehörigen Spannungen U_{1,i} und U_{2,i} einzeln dargestellt. In gleicher Art und Weise sind die in den zweiten Knoten 12 fließenden Ströme und die zugehörigen Spannungen dargestellt.

In den Zweigen sind modellhafte Widerstandsbauelemente dargestellt, die die elektrischen Eigenschaften des jeweiligen Zweigs modellieren.

Der erste Zweig 21 wird durch zwei Widerstandsbauelemente beschrieben: durch ein erstes Widerstandsbauelement G_{1,ik}, das die erste Leitung des ersten Zweigs beschreibt und durch ein zweites Widerstandsbauelement G_{2,ik}, das die zweite Leitung des ersten Zweigs beschreibt. Aus Gründen der Übersichtlichkeit ist in der Figur 1 für jeden Zweig jedoch nur ein Widerstandsbauelement Gᵢₖ dargestellt, das für das erste Widerstandsbauelement G_{1,ik} und für das zweite Widerstandsbauelement G_{2,ik} steht. Jedes Widerstandsbauelement kann durch seinen Widerstandswert R oder durch seinen Admittanzwert G beschrieben werden. In Figur 1 wird der Admittanzwert G verwendet.

Wenn zum Beispiel in den ersten Knoten 11 der erste Strom I_{1,i} hineinfließt, dann teilt sich der erste Strom I_{1,i} auf den ersten Zweig 21 und auf den zweiten Zweig 22 auf. Für die Aufteilung des Strom I_{1,i} auf die beiden Zweige sind die Admittanzwerte des jeweiligen Zweigs wesentlich: je größer der Admittanzwert G ist, desto größer ist der Strom I.

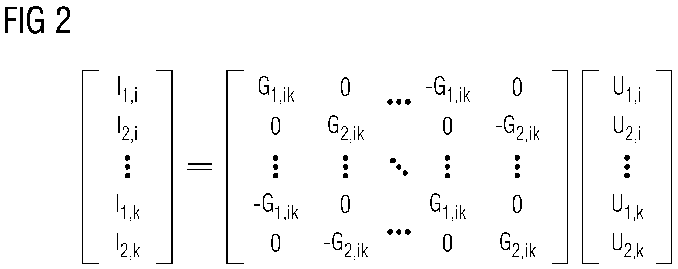

In Figur 2 ist beispielhaft ein Gleichungssystem dargestellt, das das Hochspannungs-Gleichstrom-Übertragungsnetz 1 beschreibt. Das Gleichungssystem weist die Form I=G U auf. Dabei ist I der Vektor der Ströme, genauer gesagt der Vektor der in die Knoten hineinfließenden Ströme (Knotenströme). Die Matrix G die die Admittanzmatrix, genauer gesagt die Knoten-Admittanzmatrix. Der Vektor U ist der Vektor der Spannungen (genauer gesagt der Vektor der Knotenspannungen). Die Admittanzmatrix G beschreibt das elektrische Verhalten des Hochspannungs-Gleichstrom-Übertragungsnetzes 1. Die Admittanzmatrix enthält nur die beispielhaften Werte für den i-ten Knoten und den k-ten Knoten; die Werte für die anderen Knoten sind nicht dargestellt.

An dieser Stelle sei darauf hingewiesen, dass es sich bei der Größe G genaugenommen um den Realteil der Admittanz Y handelt (G = Re Y = Re 1/Z, wobei Z die Impedanz ist). Der Wert G wird auch als Wirkleitwert G oder Konduktanz G bezeichnet. Die Matrix G müsste also genau genommen als Wirkleitwert-Matrix G oder als Konduktanz-Matrix G bezeichnet werden. In der Praxis wird jedoch die Bezeichnung Admittanzmatrix G bevorzugt, so dass die Bezeichnung Admittanzmatrix G auch hier verwendet werden soll.

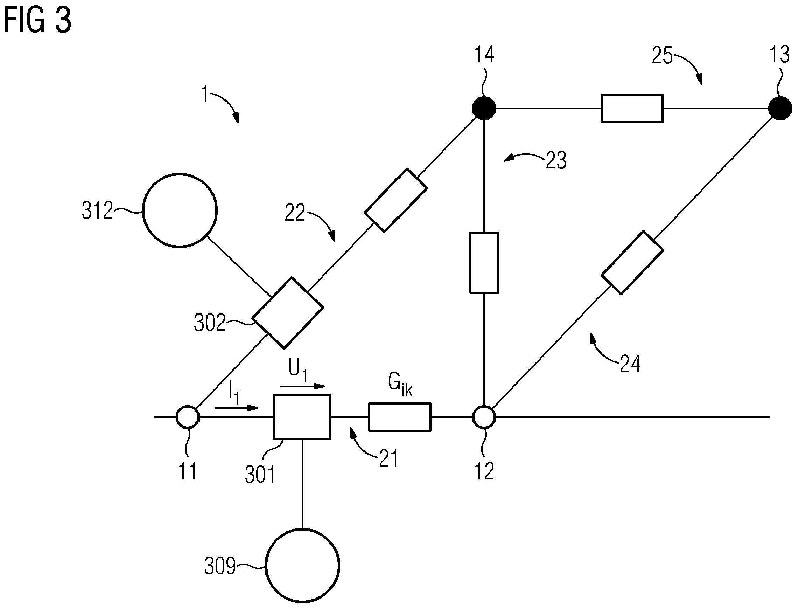

In Figur 3 ist dargestellt, wie der Leistungsfluss in dem Hochspannungs-Gleichstrom-Übertragungsnetz 1 beeinflusst werden kann. Dies ist dargestellt am Beispiel der Aufteilung des Leistungsflusses/Lastflusses von dem ersten Knoten auf den ersten Zweig 21 und den zweiten Zweig 22. Dazu weist der erste Zweig 21 einen ersten Lastflussregler 301 und der zweite Zweig 22 einen zweiten Lastflussregler 302 auf. Der erste Lastflussregler 301 ist als eine erste Längsspannungsquelle 301 ausgebildet, die die an dem ersten Zweig 21 anliegende Zweigspannung beeinflussen (d.h. vergrößern oder verkleinern) kann. Der zweite Lastflussregler 302 bildet eine zweite Längsspannungsquelle 301, die die an dem zweiten Zweig 22 anliegende Zweigspannung beeinflussen (d.h. vergrößern oder verkleinern) kann. Ein Lastflussregler für den Hochspannungsbereich weist insbesondere sowohl eine leistungselektronische Schaltung als auch einen Regler auf, der die leistungselektronische Schaltung ansteuert. Jeder Lastflussregler kann einen eigenständig arbeitenden Regler aufweisen.

Im Beispiel soll der Leistungsfluss so beeinflusst werden, dass ein größerer Teil der elektrischen Leistung durch den ersten Zweig 21 fließt. Zu diesem Zweck verkleinert der erste Lastflussregler 301 den ohmschen Widerstand des ersten Zweigs 21 um einen im Wesentlichen konstanten Wert. Dies erfolgt im Beispiel dadurch, dass der als Längsspannungsquelle wirkende erste Lastflussregler 301 die Zweigspannung des ersten Zweigs 21 verkleinert.

Der erste Lastflussregler 301 (hier: die erste Längsspannungsquelle 301) stellt eine elektrische Spannung U₁ bereit, die als Längsspannung U₁ in dem ersten Zweig 21 wirkt. Diese elektrische Spannung U₁ verkleinert die bisher vorhandene Zweigspannung. Die Polarität der von der ersten Längsspannungsquelle 301 bereitgestellten elektrischen Spannung U₁ ist im Beispiel entgegengesetzt der Richtung des durch den ersten Zweig 21 fließenden Gleichstroms I₁ (also negativ). Von dem ersten Lastflussregler 301 wird elektrische Energie in den ersten Zweig 21 eingespeist. Diese elektrische Energie stellt eine elektrische Energiequelle 309 bereit. Die elektrische Energiequelle 309 kann beispielsweise als ein mit einem anderen Energieversorgungsnetz verbundener Stromrichter ausgestaltet sein. Durch die Verkleinerung des ohmschen Widerstands des ersten Zweigs 21 fließt dann mehr elektrische Leistung durch den ersten Zweig 21.

Die von dem ersten Lastflussregler 301 erzeugte elektrische Spannung U₁ verhält sich proportional zu dem den ersten Zweig 21 durchfließenden Gleichstrom I₁. Dadurch ist der durch den Lastflussregler 301 erzeugte zusätzliche ohmsche Widerstand des ersten Zweigs 21 konstant. Der Lastflussregler wirkt also wie ein zusätzlicher ohmscher Widerstand, der einen negativen Werte annimmt.

Alternativ oder zusätzlich kann der zweite Lastflussregler 302 den ohmschen Widerstand des zweiten Zweigs 22 um einen im Wesentlichen konstanten Wert vergrößern. Dies erfolgt im Beispiel dadurch, dass der als Längsspannungsquelle wirkende zweite Lastflussregler 302 die Zweigspannung des zweiten Zweigs 22 vergrößert. Dabei entnimmt der zweite Lastflussregler 302 elektrische Energie aus dem zweiten Zweig 22. Diese elektrische Energie wird zu einer elektrischen Energiesenke 312 übertragen. Die elektrische Energiesenke 312 kann beispielsweise als ein weiterer mit dem anderen Energieversorgungsnetz verbundener Stromrichter ausgestaltet sein. Durch die Vergrößerung des ohmschen Widerstands des zweiten Zweigs 22 fließt dann weniger elektrische Leistung durch den zweiten Zweig 22 und mehr elektrische Leistung durch den ersten Zweig 21.

Im Allgemeinen wirkt der Lastflussregler also wie ein zusätzlicher ohmscher Widerstand, der positive oder negative Werte annehmen kann.

Das Verfahren zur Leistungsflussbeeinflussung kann derart ablaufen, dass zumindest ein Teil der von dem zweiten Lastflussregler 302 aus dem zweiten Zweig 22 entnommenen elektrischen Energie zu dem ersten Lastflussregler 301 übertragen wird, der diese elektrische Energie in den ersten Zweig 21 einspeist. Damit wird vorteilhafterweise weniger Energie mit der Energiequelle 309 bzw. der Energiesenke 312 ausgetauscht.. Damit wird in Summe für das Hochspannungs-Gleichstrom-Übertragungsnetz 1 der Energieverlust bzw. der zusätzliche Energiebedarf verringert. Der erste Lastflussregler und der zweite Lastflussregler können auch als ein gemeinsames Gerät - als ein Lastflussregler mit 3 Anschlüssen - realisiert werden. Wenn bedarfsweise Energiezufuhr zu oder Energieabfuhr von diesem Lastflussregler erfolgt, dann kann der Lastfluss in dem ersten Zweig 21 und in dem zweiten Zweig 22 unabhängig voneinander beeinflusst werden.

Optional kann der erste Lastflussregler 301 auch so ausgebildet sein, dass er, wenn der Strom I₁ in dem ersten Zweig 21 einen unzulässig hohen Wert annimmt, eine längs dieses ersten Zweigs 21 wirkende elektrische Spannung U₁ erzeugt, welche einer weiteren Erhöhung des Stroms I₁ in diesem Zweig 21 entgegenwirkt. Dadurch kann eine Überstrombegrenzung bzw. Überlastbegrenzung für den Zweig realisiert werden.
Vorteilhaft ist insbesondere auch, dass die ohmschen Widerstände der Zweige jeweils um einen im Wesentlichen konstanten Wert verändert werden. Dadurch werden die entsprechenden Stellen der Admittanzmatrix ebenfalls um den im Wesentlichen konstanten Wert verändert und die Admittanzmatrix bleibt ansonsten unverändert. Dadurch können die elektrischen Eigenschaften des Hochspannungs-Gleichstrom-Übertragungsnetzes auf eine vergleichsweise einfache Art und Weise beschrieben werden.

Bei dem beschriebenen Verfahren und dem beschriebenen Hochspannungs-Gleichstrom-Übertragungsnetz werden also durch die Lastflussregler die elektrischen Eigenschaften des Hochspannungs-Gleichstrom-Übertragungsnetzes so verändert, dass die Admittanzmatrix einen neuen, im Wesentlichen stationären (konstanten) Wert annimmt. Diese Änderung der Admittanzmatrix kann bei weiteren Regelungs-, Steuerungs- oder sonstigen Beeinflussungsvorgängen relativ einfach berücksichtigt werden, ohne dass es notwendig ist, das (oft komplexe) spezifische dynamische Verhalten der Lastflussregler jeweils zu berücksichtigen. Aufgrund der im Wesentlichen konstanten Admittanzmatrix ist auch der Einfluss der Lastflussregler auf das dynamische Verhalten des Hochspannungs-Gleichstrom-Übertragungsnetzes minimiert. Es kann sogar eine größere Anzahl an Lastflussreglern in dem Hochspannungs-Gleichstrom-Übertragungsnetzes eingesetzt werden, ohne dass die Gefahr des Auftretens von instabilen Zuständen wesentlich vergrößert wird.

Es wurde ein Verfahren zum Beeinflussen eines elektrischen Leistungsflusses in einem Hochspannungs-Gleichstrom-Übertragungsnetz und ein Hochspannungs-Gleichstrom-Übertragungsnetz beschrieben. Das elektrische Verhalten des Hochspannungs-Gleichstrom-Übertragungsnetzes ist trotz des Vorhandenseins von Längsspannungsreglern vergleichsweise einfach beschreibbar.

### Bezugszeichen:

- 1: Hochspannungs-Gleichstrom-Übertragungsnetz
- 11: erster Knoten
- 12: zweiter Knoten
- 13: dritter Knoten
- 14: vierter Knoten
- 21: erster Zweig
- 22: zweiter Zweig
- 23: dritter Zweig
- 24: vierter Zweig
- 25: fünfter Zweig
- 27: Stromrichter
- 301: erster Lastflussregler
- 302: zweiter Lastflussregler
- 309: Energiequelle
- 312: Energiesenke

- U₁: von Lastflussregler erzeugte Längsspannung
- I₁: Zweigstrom
- Gᵢₖ: Admittanz

## Patentansprüche

1. Verfahren zum Beeinflussen eines elektrischen Leistungsflusses in einem Hochspannungs-Gleichstrom-Übertragungsnetz (1), wobei das Hochspannungs-Gleichstrom-Übertragungsnetz eine Anzahl von Zweigen (21, 22, 23, 24, 25) und eine Anzahl von Knoten (11, 12, 13, 14) aufweist, ein Teil der Knoten Anschlussknoten (11, 12) sind, an die jeweils ein Stromrichter (27) anschließbar ist, der zum Einspeisen von elektrischer Leistung in das Hochspannungs-Gleichstrom-Übertragungsnetz oder zum Entnehmen von elektrischer Leistung aus dem Hochspannungs-Gleichstrom-Übertragungsnetz eingerichtet ist, und wobei ein Teil der Zweige (21, 22) jeweils einen Lastflussregler (301, 302) aufweist,
wobei bei dem Verfahren
- zur Verringerung der elektrischen Leistung, die über einen einen Lastflussregler (301) aufweisenden Zweig (21) übertragen wird, von dem Lastflussregler (301) der ohmsche Widerstand des Zweigs (21) um einen im Wesentlichen konstanten Wert vergrößert wird, und
- zur Vergrößerung der elektrischen Leistung, die über den den Lastflussregler (301) aufweisenden Zweig (21) übertragen wird, von dem Lastflussregler (301) der ohmsche Widerstand des Zweigs um einen im Wesentlichen konstanten Wert verringert wird.

2. Verfahren nach Anspruch 1,
**dadurch gekennzeichnet, dass**
- die Lastflussregler (301, 302) jeweils als eine Längsspannungsquelle ausgestaltet sind.

3. Verfahren nach Anspruch 1 oder 2,
**dadurch gekennzeichnet, dass**
- zur Verringerung oder Vergrößerung der elektrischen Leistung, die über den den Lastflussregler (301) aufweisenden Zweig (21) übertragen wird, von dem Lastflussregler (301) elektrische Energie in den Zweig (21) eingespeist wird oder elektrische Energie aus dem Zweig (21) entnommen wird.

4. Verfahren nach einem der vorhergehenden Ansprüche,
**dadurch gekennzeichnet, dass**
- von dem Lastflussregler (301) elektrische Energie in den Zweig (21) eingespeist wird, wenn von dem Lastflussregler (301) eine längs des Zweigs (21) wirkende elektrische Spannung (U₁) erzeugt wird, deren Polarität mit der Richtung des durch den Zweig (21) fließenden Gleichstroms (I₁) übereinstimmt, und
- von dem Lastflussregler (301) elektrische Energie aus dem Zweig (21) entnommen wird, wenn von dem Lastflussregler (301) eine längs des Zweigs (21) wirkende elektrische Spannung erzeugt wird, deren Polarität entgegengesetzt ist zur Richtung des durch den Zweig (21) fließenden Gleichstroms.

5. Verfahren nach Anspruch 1 oder 2,
**dadurch gekennzeichnet, dass**
- von dem Lastflussregler (301) eine längs des jeweiligen Zweigs (21) wirkende elektrische Spannung (U₁) erzeugt wird, die sich proportional zu dem den Zweig (21) durchfließenden Gleichstrom (I₁) verhält.

6. Verfahren nach einem der vorhergehenden Ansprüche,
**dadurch gekennzeichnet, dass**
die Anzahl der Anschlussknoten (11, 12) kleiner ist als die Anzahl der Zweige (21, 22, 23, 24, 25).

7. Verfahren nach einem der vorhergehenden Ansprüche,
**dadurch gekennzeichnet, dass**
- wenn der Strom in dem jeweiligen Zweig einen unzulässig hohen Wert annimmt, von dem Lastflussregler (301) eine längs dieses Zweigs (21) wirkende elektrische Spannung (U₁) erzeugt wird, welche einer weiteren Erhöhung des Stroms in diesem Zweig entgegenwirkt.

8. Hochspannungs-Gleichstrom-Übertragungsnetz, das eine Anzahl von Zweigen (21, 22, 23, 24) und eine Anzahl von Knoten (11, 12, 13, 14) aufweist, wobei ein Teil der Knoten Anschlussknoten (11, 12) sind, an die jeweils ein Stromrichter (27) anschließbar ist, der zum Einspeisen von elektrischer Leistung in das Hochspannungs-Gleichstrom-Übertragungsnetz (1) oder zum Entnehmen von elektrischer Leistung aus dem Hochspannungs-Gleichstrom-Übertragungsnetz (1) eingerichtet ist, wobei ein Teil der Zweige (21, 22) jeweils einen Lastflussregler (301, 302) aufweist, und wobei mindestens einer der Lastflussregler so eingerichtet ist, dass er
- zur Verringerung der elektrischen Leistung, die über den diesen Lastflussregler (301) aufweisenden Zweig (21) übertragen wird, den ohmschen Widerstand des Zweigs (21) um einen im Wesentlichen konstanten Wert vergrößert, und
- zur Vergrößerung der elektrischen Leistung, die über den diesen Lastflussregler (301) aufweisenden Zweig (21) übertragen wird, den ohmschen Widerstand des Zweigs (21) um einen im Wesentlichen konstanten Wert verringert.

9. Hochspannungs-Gleichstrom-Übertragungsnetz nach Anspruch 8,
**dadurch gekennzeichnet, dass**
- die Lastflussregler (301, 302) jeweils als eine Längsspannungsquelle ausgestaltet sind.

10. Hochspannungs-Gleichstrom-Übertragungsnetz nach Anspruch 8 oder 9,
**dadurch gekennzeichnet, dass**
der Lastflussregler (301) so eingerichtet ist, dass er
- zur Verringerung oder Vergrößerung der elektrischen Leistung, die über den diesen Lastflussregler (301) aufweisenden Zweig (21) übertragen wird, elektrische Energie in den Zweig (21) einspeist oder elektrische Energie aus dem Zweig (21) entnimmt.

11. Hochspannungs-Gleichstrom-Übertragungsnetz nach einem der Ansprüche 8 bis 10,
**dadurch gekennzeichnet, dass**
der Lastflussregler (301) so eingerichtet ist, dass er
- elektrische Energie in den Zweig (21) einspeist, wenn er eine längs des Zweigs (21) wirkende elektrische Spannung erzeugt, deren Polarität mit der Richtung des durch den Zweig (21) fließenden Gleichstroms übereinstimmt, und
- elektrische Energie aus dem Zweig (21) entnimmt, wenn er eine längs des Zweigs (21) wirkende elektrische Spannung erzeugt, deren Polarität entgegengesetzt ist zur Richtung des durch den Zweig (21) fließenden Gleichstroms.

12. Hochspannungs-Gleichstrom-Übertragungsnetz nach einem der Ansprüche 8 bis 11,
**dadurch gekennzeichnet, dass**
- der Lastflussregler (301) so eingerichtet ist, dass er eine längs des diesen Lastflussregler (301) aufweisenden Zweigs (21) wirkende elektrische Spannung erzeugt, die sich proportional zu dem den Zweig (21) durchfließenden Gleichstrom verhält.

13. Hochspannungs-Gleichstrom-Übertragungsnetz nach einem der Ansprüche 8 bis 12,
**dadurch gekennzeichnet, dass**
- die Anzahl der Anschlussknoten (11, 12) kleiner ist als die Anzahl der Zweige (21, 22, 23, 24, 25).

14. Hochspannungs-Gleichstrom-Übertragungsnetz nach einem der Ansprüche 8 bis 13,
**dadurch gekennzeichnet, dass**
- der Lastflussregler (301) so eingerichtet ist, dass er, wenn der Strom in dem jeweiligen Zweig einen unzulässig hohen Wert annimmt, eine längs dieses Zweigs (21) wirkende elektrische Spannung (U₁) erzeugt, welche einer weiteren Erhöhung des Stroms in diesem Zweig entgegenwirkt.
